# EUROPEAN PATENT APPLICATION

(11) **EP 3 941 002 A1**
(43) Date of publication of application: **19.01.2022**
(21) Application number: 20185623.4
(22) Date of filing: 14.07.2020
(51) Int. Cl.: H04L 12/707, H04L 12/703, H04B 17/345, H04B 17/40, H04B 7/026, H04L 1/00

(54) **METHOD OF AVOIDING JAMMING IN A WIRELESS NETWORK IN AN INDUSTRIAL FACILITY**

(71) Applicant: Siemens Aktiengesellschaft, 80333 München (DE)
(72) Inventor: Fiorentino, Vincenzo, 90491 Nürnberg (DE); Richter, Siegfried, 91207 Lauf (DE)

(57) **Abstract**

The current disclosure describes a method of communicating with a second network device in an industrial facility. The method comprises determining an interference in a first communication path between the first and the second network devices, the interference being caused by an interference source, determining a first set of non-direct transmission paths to the second network device, and transmitting a plurality of data packets to the second network device over at least one non-direct transmission path from the first set of non-direct transmission paths.

## Description

### Background

The current invention relates to wireless communication in industrial automation environments and more specifically, to robust and secure wireless communication in industrial facilities.

With increasing implementation of industrial internet of things and other Industry 4.0 concepts in factories, plants and other industrial facilities, a plurality of assets in these facilities will be connected wirelessly. Several wireless networks and technologies such as cellular networks, local area networks, short range communication techniques such as Bluetooth, Near Field Communication, etc., may be utilized in enabling wireless communication. However, with increased utilization of wireless communication, penalty from wireless security threats, also increases considerably.

### Description

The current invention relates to security techniques for industrial wireless communication and more particularly to mitigation of jamming sources in industrial facilities.

A jamming source (also referred to as a malicious interference source) is a radio device that is capable generating interfering signals (also referred to as jamming signals) to disturb or block a radio communication within its radio range. Jamming signals can block the radio communication between a transmitter and a receiver by causing strong interference in the frequency band used by the transmitter and receiver.

A plurality of jamming techniques are used to create interference and disrupt wireless communications. Some of the common techniques include transmitting white noise or single tone jammer operating constantly on a fixed frequency, transmitting a jamming with a fixed or random pattern each time on different frequencies, transmitting a jamming signal simultaneously over multiple frequencies, etc. Certain jamming techniques are reactive and difficult to detect. For example, in an example a jammer may listen to a particular channel and determine the channel schedule. Based on the determined channel schedule, the jammer may transmit only during select times as per the channel schedule. In a further case, the jammer may receive the signal to be attacked and utilize the signal as the jamming signal by amplifying and re-transmitting the amplified signal to cause interference.

In the context of industrial environments, such jamming attacks can severely slow down or even block the entire production processes. Additionally, a jamming attack can have serious safety impact when equipment are used in collaborative operation with human personnel. Accordingly, there is a need for a method and device to address the issues mentioned above.

Accordingly, the current disclosure describes method accordingly to claim 1, network device according to claim 9 and non-transitory storage medium according to claim 10 which addresses the above-mentioned aspects.

Accordingly, the current disclosure describes a method of communicating with a second network device in an industrial facility. The method comprises determining an interference in a first communication path between the first and the second network devices, the interference being caused by an interference source, determining a first set of non-direct transmission paths to the second network device, and transmitting a plurality of data packets to the second network device over at least one non-direct transmission path from the first set of non-direct transmission paths. In an example, the at least one non-direct transmission path is outside of an interference zone associated with the interference source.

Accordingly, the above described method mitigates the impact of the interference source by utilizing indirect transmission paths which are outside the effect of the interference source to communicate with other network devices. Since the direct transmission paths are impacted by the interference source, the network device can utilize indirect transmission paths which are not severely impacted by the interference source.

In an example, determination of the interference is done based on a notification message from a network management device. The network management device is configured to detect the interference source. Accordingly, the detection of interference sources within the industrial facility may be performed by a central entity i.e. the network management unit using the measurements from the network devices in the industrial facility.

In an example, the first network device comprises one or more phased array antennas and the second network device comprises one or more omni-directional antennas. Accordingly, by using directional phased array antennas, the first network device can transmit messages along the one or more indirect communication paths optimally.

In an example, determining the first set of non-direct transmission paths to the second network device comprises transmitting a plurality of advertisement or control messages on a plurality of non-direct transmission paths to the second network device, each advertisement message transmitted on a corresponding non-direct transmission path comprising a path identifier for identifying the corresponding non-direct transmission path; receiving a feedback message from the second network device, the feedback message comprising a plurality of signal quality indices associated with the plurality of the non-direct transmission path at the second network device; and selecting a first set of non-direct transmission paths from the plurality of non-direct transmission paths based on the plurality of signal quality indices. Accordingly, the first network device is configured to select non-direct transmission paths which have good signal quality.

In an example, the method further comprises transmitting a first set of data packets to the second network device along the first communication path, wherein each data packet from the first set of data packets is a dummy data packet and includes predefined data. Accordingly, transmitting dummy packets via the first communication path ensures that the interference source is unlikely to detect a change in behavior of the first and second network devices and does not change its jamming frequencies.

In an example, the method further comprises identifying a third network device capable of communicating with the second network device; transmitting a transmission schedule and the plurality of duplicate data packets to the third network device, wherein each duplicate data packet from the plurality of data packets comprises a data payload associated with a corresponding data packet from the plurality of data packets. The third network device is configured to transmit the plurality of duplicate data packets over at least another direct or non-direct transmission path to the second network device in a first time slot over a first frequency based on the transmission schedule. In an example, the at least another non-direct transmission path is outside the interference zone associated with the interference source. In another example, the method further comprises identifying a third network device capable of communicating with the second network device; determining a first set of direct and non-direct transmission paths to the third network device,; transmitting the plurality of data packets to the third network device over at least one transmission path from the first set of direct and non-direct transmission paths, in a first time slot over a first frequency; wherein the third network device is configured to transmit the plurality of data packets to the second network device. Accordingly, by using a third network device for transmission or reception, the reliability of communication is increased. In an example, the first set of non-direct transmission paths are outside of an interference zone associated with the interference source.

In another aspect, the current disclosure describes a network device configured to communicate with one or more network devices in an industrial facility. The network device comprises a network interface for transmitting and receiving data from the one or more network devices and one or more processors connected to a memory module. The one or more processors are configured to determine an interference in a first communication path to the second network devices, wherein the interference is caused by an interference source; determine a first set of non-direct transmission paths to the second network device; and transmit a plurality of data packets to the second network device over at least one non-direct transmission path from the first set of non-direct transmission paths.

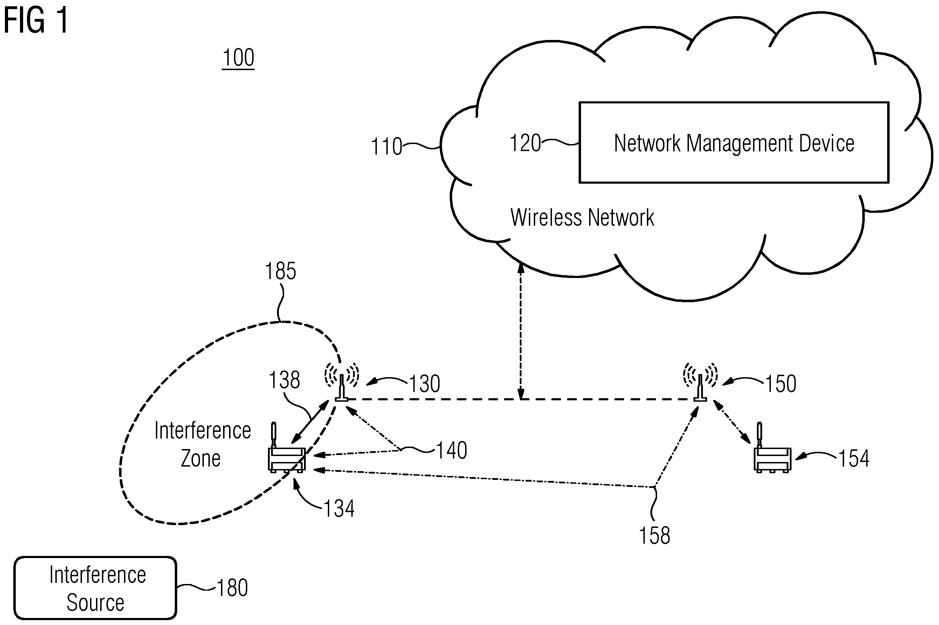

In yet another aspect, the current disclosure describes a non-transitory storage medium comprising a plurality of instructions which when executed on one or more processors, causes the one or more processors to determine an interference in a first communication path to the second network devices, wherein the interference is caused by an interference source; determine a first set of non-direct transmission paths to the second network device; and transmit a plurality of data packets to the second network device over at least one non-direct transmission path from the first set of non-direct transmission paths. The advantages of the methods apply to the devices described herein. These aspects are further described in relation figures 1-4.

The following detailed description references the drawings, wherein:
Figure 1 illustrates an example section of an example industrial facility comprising a plurality of network devices in a wireless network in the industrial facility;
Figure 2 illustrates an example method for communicating with a second network device in an industrial facility;
Figure 3 is a block diagram of an example network device for communicating in the wireless network in the industrial facility; and

Figure 1 illustrates a section 100 of an industrial wireless network in an industrial facility. Industrial facility herein refers to any environment where one or more industrial processes such as manufacturing, refining, smelting, assembly of equipment may take place and includes process plants, oil refineries, automobile factories, etc. The industrial system includes a plurality of control devices such as process controllers, programmable logic controllers, supervisory controllers, automated guidance vehicles, robots, operator devices, etc. One or more control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and wireless networks). Additionally, the industrial system includes a plurality of mobile units including one or more robots for performing a plurality of operations such as welding, assembly of parts; one or more autonomous guidance vehicles for transportation and handling of material, one or more assets with RFID tags on conveyor belts, etc., in the industrial plant. Additionally, the industrial system may include an operator station for displaying the status of the industrial plant to an operator and for allowing the operator to define KPIs for the control of the industrial processes in the facility.

Communication in the industrial facility happens through wired and wireless networks. A section 100 of such a wireless network is illustrated in figure 1. The wireless network comprises a plurality of network devices (120, 130, 134, 150, 154). The plurality of network devices (120, 130, 150, 154) includes a plurality of industrial gateway devices (130, 150; also referred to as gateway devices) and a plurality of user devices (shown in the figure as user devices 134, and 154). Gateway devices herein refers to one or more network devices capable of connecting the user devices to the wireless network. Examples of gateway devices include base stations, routers, switches, relays, access points, etc.

The plurality of gateway devices are affixed to a plurality of locations in the industrial facility. The plurality of the user devices (134, 154) in the facility are connected to one or more industrial gateway devices (130, 150) to connect to the wireless network and for communicating information with the other devices and systems in the industrial facility.

The wireless network further comprises a network management device 120 for managing the wireless network. The network management device 120 is configured to detect jamming or interference source 180 (including unintentional and malicious interference source) and take one or more actions to mitigate interference in the wireless network. The network management device 120 determines one or more characteristics of the interference source 180. In an example, the network management device 120 can utilize one or more automated guidance vehicles for determining the characteristics of the interference source 180.

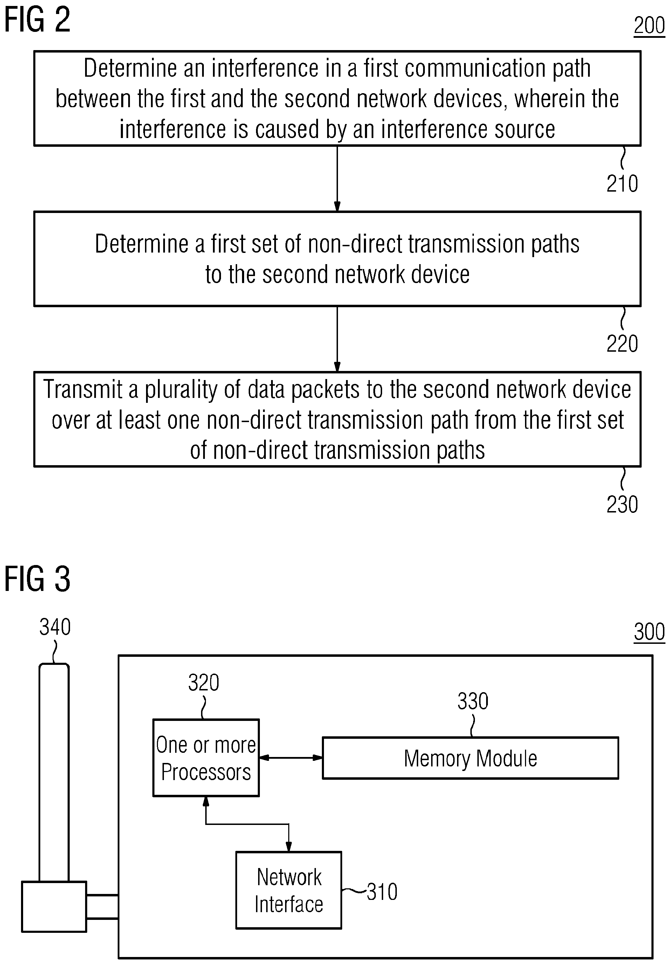

Then, based on the detected characteristics of interference source 180, the network management device 120 can advise the network devices impacted by the interference source 180 to utilize in-direct transmission paths to continue communication with each other. This is further explained in description of figure 2.

It may be noted by a person skilled in the art, that the while in the figure 1 the interference source 180 is illustrated within the section 100 of the industrial facility, interference source 180 may be located within the industrial facility or outside the physical premises of the industrial facility. While the interference source may be physically present outside the industrial facility, the jamming signals may be able to impact the wireless network within the industrial facility.

Figure 2 illustrates a method 200 for communicating with a second network device in an industrial facility by a first network device. For explaining the invention, the first network device is the gateway device 130 and the second network device is the user device 134. Similarly, the interference source 180 is assumed to impact the network device (130, and 134) since these devices are assumed to be within the interference zone 185 of the interference source 180.

At the step 210, the first network device determines an interference in a first communication path between the first and the second network device. As mentioned above for explaining the example, the first network device is the gateway device 130 and the second network device is the user device 134. The gateway device 130 determines interference in a first communication path to the user device 134. As shown in the figure 1, the first communication path 138 between the gateway device 130 and user device 134 lies with the interference zone 185 of the interference source 180 and accordingly, is impacted by the interference from the interference source 180.

In an example, the network management device 120 detects the interference source 180 and the network devices impacted by the interference source 180. Then, the network management device 120 notifies the gateway device 130 of the detected interference source by sending a notification message. The notification message includes information associated with the characteristics of the interference source including frequency ranges within which the interference source is operating, geographical area within which the interference source is operating, direction of the interference source with regards to the first network device (gateway device 130), etc..

In another example, the first network device (gateway device 130) determines the interference in the first communication path between the first and the second network device based on network quality parameters associated with the first communication path.

Then at step 220, the first network device determines a first set of non-direct transmission paths to the second network device. Continuing the example, the gateway device 130 scans for multipath propagation based transmission paths via which the gateway device 130 can send and receive data to/from the user device 134. To determine the first set of non-direct transmission paths, the first network device i.e. the gateway device 130 sends or transmits a plurality of advertisement or control messages on a plurality of non-direct transmission paths to the second device. The control messages may be sent via the network control plane. The plurality of non-direct transmission paths are determined.

Each advertisement message is transmitted on a particular non-direct transmission path from the plurality of non-direct transmission paths and includes a path identifier associated with the corresponding non-direct transmission path. Each advertisement message may or may not be received by the user device 134.

Then, the gateway device 130 receives a feedback message from the user device 134 indicative of the quality of the plurality of advertisement messages received at the user device 134. Based on the transmitted advertisement messages, the user device 134 determines one or more path parameters associated with the plurality of non-direct transmission paths. The path parameters are indicative of the quality of the transmission path and includes signal to noise ratio, transmission delay, etc. Accordingly, based on the path parameters of the indirect transmission paths, the gateway device 130 selects a first set of the indirect transmission paths from the plurality of indirect transmission paths. In an example, the gateway device 130 selects the first set of non-direct transmission paths from the plurality of transmission paths based on the path parameters of the non-direct transmission paths and predefined threshold values associated with the path parameters. For example, the gateway device 130 selects one or more paths which have a transmission delay less than a predefined threshold according to quality of service required for the communication with the user device 134.

Additionally, in an example, based on the detected interference and the path parameters, the gateway device 130 selects the first set of non-direct transmission paths such that each non-direct transmission path is outside the interference zone 185 of the interference source 180. In an example, based on the notification from the network management device 120, the gateway device 110 can ascertain the interference zone 185 and the direction of the interference source relative to itself. Then, based on the direction of the interference source 180 and the interference zone 185, the gateway device 110 determines the first set of non-direct transmission paths such that the first set of non-direct transmission paths are outside the interference zone 185.

Then at step 230, the first network device transmits a plurality of data packets to the second network device over at least one non-direct transmission path from the first set of non-direct transmission paths. Accordingly, continuing the above example, the gateway device 130 transmits a plurality of data packets to the user device 134 using at least one non-direct transmission path from the first set of non-direct transmission path. Accordingly, the gateway device 110 can continue to communicate with the user device 134 by using the at least one non-direct transmission path since the non-direct transmission path is not significantly affected by the interference source 180.

In an example, subsequent to the detection of the interference source 180, the first network device transmits a first set of data packets to the second network device in the direction of the interference source over the first communication path. The first set of data packets are dummy data packets and do not contain any actual production data. The first set of data packets are generated using predefined data and are used by the first network device to deceive or confuse the interference source to believe that communication between the first and the second network device is still happening on the first communication path. As mentioned above, the interference source may be a malicious source or a non-malicious source. In case of a "smart" malicious interference source which is also able to listen at the interfered target channel this transmission of dummy packets ensures that the interference source still believes that the transmission is active and the affected network devices have not changed channels

In addition to using multipath propagation, the first and second network devices can use joint transmission with other network devices to improve reliability of the packets transmitted via the non-direct and direct transmission paths. This is further explained using examples below.

Continuing the above example of the gateway device 130 and user device 134, based on the feedback message from the user device 134, the gateway device 130 along with the network management device 120 can determine if joint transmission using the other network devices is required to communicate to the user device 134. If the feedback message indicates that the signal quality of all the non-direct transmission paths from the plurality of non-direct transmission paths is lower than a predefined threshold value, the network management device 120 along with the gateway device 130 determines that joint transmission using the other network devices is required to transmit data packets to the user device 134.

Accordingly, in order to improve the reliability of communication with the user device 134, the network management device 120 selects a network device from the other network devices to act as the third network device. In an example, the network management device 120 selects a network device (herein after referred to as third network device) which has a communication path to the user device 134 with a signal to noise ration above a predefined threshold value and is capable of transmitting signals using directional antennas. In reference to figure 1, the network management device 120 selects the gateway device 150 for acting as the third network device.

Then, the gateway device 130 along with the network management device 120 130 transmit a transmission schedule and a plurality of duplicate data packets to the gateway device 150. Each duplicate data packet from the plurality of duplicate data packets comprises a data payload associated with a corresponding data packet from the plurality of data packets to be transmitted by the gateway device 130 to the user device 134. The transmission schedule includes details regarding the radio resources to be used for transmitting the plurality of duplicate data packets.

Subsequent to receiving the plurality of duplicate data packets and the transmission schedule, the gateway device 150 is configured to determine one or more direct or non-direct transmission paths to the user device 134. The determination of the non-direct transmission paths may be performed using the techniques described above. Then, the gateway device 150 is configured to transmit the plurality of duplicate data packets over at least one of a direct transmission path and another non-direct transmission path to the user device 134 in a first time slot over a first frequency based on the transmission schedule.

In an example, joint transmission by the first and the third network devices to the second network device is based on packet duplication (PDPCP) i.e. two sets of identical data packets are transmitted to the second network device from the first and third network devices. The second network device is configured to eliminate duplicate packets if a data packet with the same data content has been received previously. In another example, joint transmission by the first and the third network devices to the second network device is based on coordinated multipoint transmission. In the current example, the first and third network devices transmit in a radio coordinated fashion to improve the received signal at the second network device.

Similarly in order to improve reliability of communication from the second network device to the first network device, the second network device is configured to communicate with a third network device which is capable of communicating with the first network device. This is further explained using the gateway device 130 and user device 134.

In order to improve communication reliability, the network management device 120 can determine a third network device for the user device 134 to communicate with in addition to the first network device. In reference to figure 1, the network management device selects the gateway device 150 as the third network device.

Then, the user device 134 determines a first set of direct and non-direct transmission paths to the third network device. The determination of the non-direct transmission paths are done using the technique described. Then, the user device 134 transmits a plurality of data packets to the gateway device 130 and a plurality of duplicate data packets to the gateway device 150 over at least one transmission path from the first set of direct and non-direct transmission paths. The gateway device 150 is then configured to transmit the duplicate data packets to the gateway device 120.

In an example, to detect the interference source and the impacted network devices, the network management device 120 detects a degradation in a section of the wireless network based on the network quality information from the plurality of network devices (130, 140, 150, 134, 138, 144, 154). For detecting the degradation in the section of the wireless network, the network management device 120 receives network quality information from the plurality of network devices (130, 140, 150, 134, 138, 144, 154). Network quality information from a corresponding network device includes one or more network key performance indices (KPIs, also referred to as network KPIs) indicative of signal quality at a corresponding network device, and a network identifier of the corresponding network device. Network identifier herein refers to any identifier used to identify the network device. Examples of network identifiers include Internet Protocol (IP) address, Media Access Control (MAC) address, International Mobile Subscriber Identity (IMSI), Mobile Station International ISDN Number, or other defined according to the technology used, etc. Example of network KPIs which are indicative of signal quality, include Residual Signal Strength Indicator (RSSI), Signal to interference plus noise ratio (SINR), Packet Error Rate (PER), data latency, data rate and modulation scheme used by the corresponding network device.

Then, for detecting the degradation, the network management device 120 analyses the values of the network KPIs from each of the network device from the plurality of network devices. In an example, if the values of the network KPIs are outside of a certain predefined threshold range, the network management device 120 determines that the corresponding network device is experiencing network degradation. The threshold range may be determined based on historic values.

In an example, subsequent to determining all the network devices which are experiencing network degradation, then based on network topology, the network management device 120 can determine if one or more devices are within a predetermined proximity to each other in geographical or network terms. Network topology herein refers to a physical layout comprising location information of the network devices installed in the industrial facility along with the physical and logical interconnections amongst the network devices. For example, two network devices are considered to be proximate to one another when they are connected to each other or are connected to the same gateway device. In another example, two network devices are considered to be proximate to one another when they are with a predefined distance of each other's geographical location in the industrial facility. Then, based on the proximate network devices experiencing network degradation, the network management device detects the section of the network experiencing degradation. The section of the network comprises the proximate network devices experiencing network degradation.

In order to determine the characteristics of the interference source 180, the network management device 120 determines a geographical area associated with the section of the network based on the network quality information from the one or more network devices in the section of the network. The geographical area serves as the target area within which the interference source is assumed to be operating. The network management device 120 determines the geographical area, based on the locations of the one or more network devices in the section of the network. In an example, the network management device determines the geographical area of a predetermined size comprising all the locations of the one or more network devices. In an example, the geographical area is determined based on the locations of the network devices and the radio range of the network devices. In an example, antenna characteristics and antenna orientation of the network device may be used for further used to determine the geographical area.

Then, subsequent to determining the geographical area, the network management device 120 relies on one or more network devices which are mobile (also referred to as mobile units) to take a plurality of measurements in the geographical area to determine a plurality of radio characteristics of the interference source. Mobile units are capable of determining their position and are able to determine the direction and orientation of the antenna during measurements of network KPIs. The mobile units are equipped with 2D or 3D radio antenna phased arrays.

Then, based on the measurements, the network management device 120 is able to determine the radio characteristics of the interference source. Radio characteristics includes frequency spectrum in which the interference source operates, the interference zone and devices affected from the interference source, etc.

The present disclosure can take a form of a computer program product comprising program modules accessible from computer-usable or computer-readable medium storing program code for use by or in connection with one or more computers, processing units, or instruction execution system. For example, the functions of the network management device 120 or network devices such as the gateway device 130 or user device 134 may be realized across one or more devices.

Accordingly, the current disclosure describes a network device 300 as shown in figure 3. The network device 300 is configured to communicate with one or more network devices in an industrial facility. The network device 300 comprises a network interface 310 for transmitting and receiving data from the one or more network devices, and one or more processors 320 connected to a memory module 330. The network interface is connected to an antenna 340. The memory module 330 (also known as non transitory storage medium) includes a plurality of instructions which are executed by the processors 320. Upon the execution of the instructions, the one or more processors configured to determine an interference in a first communication path between the first and the second network devices, wherein the interference is caused by an interference source; determine a first set of non-direct transmission paths to the second network device; and transmit a plurality of data packets to the second network device over at least one non-direct transmission path from the first set of non-direct transmission paths; wherein the at least one non-direct transmission path is outside of an interference zone associated with the interference source.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of communicating with a second network device (134) in an industrial facility, the method (200), by the first network device (130), comprising:
a. determining (210) an interference in a first communication path (138) between the first and the second network devices (130, 134), wherein the interference is caused by an interference source (180) ;
b. determining (220) a first set of non-direct transmission paths to the second network device (134); and
c. transmitting a plurality of data packets to the second network device (134) over at least one non-direct transmission path (140) from the first set of non-direct transmission paths.

2. The method (200) as claimed in claim 1, wherein the at least one non-direct transmission path (140) is outside of an interference zone (185) associated with the interference source (180).

3. The method (200) as claimed in claim 1, wherein determining the interference comprises receiving a notification message from a network management device (120), wherein the network management device (120) is configured to detect the interference source (180).

4. The method (200) as claimed in claim 1, wherein the first network device (130) comprises one or more phased array antennas and the second network device (134) comprises one or more omni-directional antennas.

5. The method (200) as claimed in claim 1, wherein determining the first set of non-direct transmission paths to the second network device (134) comprises
a. transmitting a plurality of advertisement messages on a plurality of non-direct transmission paths to the second network device (134), each advertisement message transmitted on a corresponding non-direct transmission path comprising a path identifier for identifying the corresponding non-direct transmission path;
b. receiving a feedback message from the second network device (134), the feedback message comprising a plurality of signal quality indices associated with the plurality of the non-direct transmission path at the second network device (134); and
c. selecting a first set of non-direct transmission paths from the plurality of non-direct transmission paths based on the plurality of signal quality indices.

6. The method (200) as claimed in claim 1, wherein the method (200) further comprises:
a. transmitting a first set of data packets to the second network device (134) along the first communication path (138), wherein each data packet from the first set of data packets is a dummy data packet and includes predefined data.

7. The method (200) as claimed in claim 1, wherein the method (200) further comprises:
a. identifying a third network device (150) capable of communicating with the second network device (134);
b. transmitting a transmission schedule and the plurality of duplicate data packets to the third network device (150), wherein each duplicate data packet from the plurality of data packets comprises a data payload associated with a corresponding data packet from the plurality of data packets;
wherein the third network device (150) is configured to transmit the plurality of duplicate data packets over at least one of a direct and non-direct transmission path (158) to the second network device (150) in a first time slot over a first frequency based on the transmission schedule.

8. The method (200) as claimed in claim 1, wherein the method (200) further comprises:
a. identifying a third network device (150) capable of communicating with the second network device (134);
b. determining a first set of direct and non-direct transmission paths to the third network device (150);
c. transmitting the plurality of data packets to the third network device (150) over at least one transmission path from the first set of direct and non-direct transmission paths;
wherein the third network device (150) is configured to transmit the plurality of data packets to the second network device (134).

9. A network device (300) configured to communicate with one or more network devices in an industrial facility, the network device comprising:
a. a network interface (310) for transmitting and receiving data from the one or more network devices;
b. one or more processors (320) connected to a memory module (330), the one or more processors (320) configured to
i. determine an interference in a first communication path (138) to a second network devices (134), wherein the interference is caused by an interference source (180);
ii. determine a first set of non-direct transmission paths to the second network device (134); and
iii. transmit a plurality of data packets to the second network device (134) over at least one non-direct transmission path (140) from the first set of non-direct transmission paths.

10. A non-transitory storage medium (330) comprising a plurality of instructions which when executed on one or more processors (320), causes the one or more processors (320) to
a. determine an interference in a first communication path (138) to a second network devices (130, 134), wherein the interference is caused by an interference source (180);
b. determine a first set of non-direct transmission paths to the second network device (134); and
c. transmit a plurality of data packets to the second network device (134) over at least one non-direct transmission path (140) from the first set of non-direct transmission paths.
